# EUROPEAN PATENT SPECIFICATION

(11) **EP 3 286 663 B1**
(45) Date of publication and mention of the grant of the patent: **23.12.2020**
(21) Application number: 16719705.2
(22) Date of filing: 21.04.2016
(51) Int. Cl.: G06F 16/957, G06F 16/9535

(54) **GENERATING MOBILE-FRIENDLINESS SCORES FOR RESOURCES**
BEWERTUNG VON RESOURCEN HINSICHTLICH DER EIGNUNG FÜR MOBILE GERÄTE
GENERATION DES SCORES D'APTITUDE DES RESSOURCES POUR LES APPAREILS MOBILES

(30) Priority: 21.04.2015 US 201562150782 P
(43) Date of publication of application: 28.02.2018
(73) Proprietor: Google LLC, Mountain View, CA 94043 (US)
(72) Inventor: PHAN, Doantam, Mountain View, California 94043 (US); IMAIZUMI, Ryoichi, Tokyo 106-6126 (JP); MCQUADE, Bryan, Mountain View, California 94043 (US)
(74) Representative: Harden, Henry Simon
(86) International application number: PCT/US2016/028692
(87) International publication number: WO 2016/172371

(56) References cited:
- US-A1- 2012 271 820
- Eric Siu: "What Google's New Mobile-Friendly Changes Mean for You", , 11 April 2015 (2015-04-11), XP055273913, Retrieved from the Internet: URL:https://web.archive.org/web/2015041102 0011/http://www.entrepreneur.com/article/2 44737? [retrieved on 2016-05-20]
- Emil Protalinski: "/googles-mobile-search-results-get-mobile -friendly-label-to-show-you-which-sites-wo rk-best-on-your-phone/ 1 / 3", , 29 January 2015 (2015-01-29), XP055273654, Retrieved from the Internet: URL:https://web.archive.org/web/2015012909 5120/http://venturebeat.com/2014/11/18/goo gles-mobile-search-results-get-mobile-frie ndly-label-to-show-you-which-sites-work-be st-on-your-phone/ [retrieved on 2016-05-19]
- Anonymous: "Search engine indexing - Wikipedia, the free encyclopedia", , 1 March 2015 (2015-03-01), XP055275478, Retrieved from the Internet: URL:https://en.wikipedia.org/w/index.php?t itle=Search_engine_indexing&oldid=64939798 0 [retrieved on 2016-05-04]

## Description

### BACKGROUND

This specification relates to Internet search engines.

Internet search engines aim to identify resources, e.g., web pages, images, text documents, and multimedia content, that are relevant to a user's information needs and to present information about the resources in a manner that is most useful to the user. Internet search engines generally return a set of search results, each identifying a respective resource, in response to a user-submitted query.

A mobile-friendliness test is summarized in articles by Eric Siu ("What Google's New Mobile-Friendly Changes Mean for You*"*) and Emil Protalinski ("Google's mobile search results get 'mobile-friendly' label").

### SUMMARY

This specification describes technologies that relate to evaluating aspects of the rendering of a resource on devices, e.g., a desktop computer, a tablet computer, a mobile phone, and so on, and, in some embodiments, generating mobile-friendliness scores for the resources based on the evaluation.

The subject matter described in this specification can be implemented in particular embodiments so as to realize one or more of the following advantages. A score that represents the degree to which a resource is optimized for viewing and control or other interaction on mobile devices can effectively be computed. A tool may be provided to a resource developer to evaluate their resource for various characteristics relating to the quality and ease of use of the resource when rendered on a mobile device. Feedback may be provided to the developer by the tool to permit the developer to modify general or specific aspects of the resource to improve the quality and ease of use of the resource when rendered on a mobile device. Furthermore, by using the score to adjust the ranking of search results or to modify search results to indicate that certain search results identify mobile-friendly resources, the quality of search results provided to users of a search engine that submit queries from mobile devices can be improved. The user experience of users of a search engine that interact with the search engine using mobile devices can be improved by allowing users to easily access resources that are optimized for viewing on mobile devices. If resource load speed is used as a mobile-friendliness signal, users can more easily access resources that load quickly on their mobile device, even if the device is on a slow network.

According to a first aspect described herein, there is provided a method comprising: obtaining data identifying a particular resource; submitting a request for the particular resource to a site hosting the particular resource; receiving, in response to the request, a resource document from the site hosting the particular resource; rendering the resource document; evaluating a result of the rendering to determine a respective signal score for each of one or more mobile-friendliness signals; computing a mobile-friendliness score for the particular resource from the one or more signal scores, wherein the mobile-friendliness score represents a degree to which the particular resource has been optimized to be viewed on a mobile device; and associating the mobile-friendliness score for the particular resource with the particular resource in an index.

Submitting the request for the resource to the site hosting the resource may comprise submitting the request as a mobile agent.

Computing the mobile-friendliness score for the particular resources may comprise combining the one or more signal scores to generate an overall score; and generating the mobile-friendliness score from the overall score.

Evaluating the result of the rendering may comprise determining a signal score for a plugin signal from an amount of content of the rendered resource document that requires a plugin to display.

Evaluating the result of the rendering may comprise determining a signal score for a viewport configuration signal from how the resource document configures a viewport for the resource document.

Evaluating the result of the rendering may comprise determining a signal score for a viewable area signal from a proportion of a total content area of the rendered resource document that is visible.

Evaluating the result of the rendering comprises determining a signal score for a tap target signal from a count of tap targets in the rendered resource document that are within a threshold distance of another tap target in the rendered resource document.

Evaluating the result of the rendering comprises determining a signal score for a tap target signal from a count of tap targets in the rendered resource document that are smaller than a threshold size in the rendered resource document.

Evaluating the result of the rendering comprise determining a signal score for a text size signal from a proportion of a total text in the rendered resource document that is smaller than a threshold text size.

The method may further comprise: receiving a search query; obtaining search results for the search query, wherein each of the search results identifies a respective resource, and wherein a particular search result identifies the particular resource; determining that the search query has been classified as being submitted by a mobile device; and in response to determining that the search query has been classified as being submitted by a mobile device, modifying the search results based upon the mobile-friendliness scores of at least one of the respective resources.

The method may further comprise: receiving a search query; obtaining search results for the search query, wherein each of the search results identifies a respective resource, and wherein a particular search result identifies the particular resource;
obtaining a respective initial ranking score for each of the resources identified by the search results; determining that the search query has been classified as being submitted by a mobile device. In response to determining that the search query has been classified as being submitted by a mobile device, the initial ranking score for the particular resource is adjusted using the mobile-friendliness score for the particular resource to generate a modified ranking score for the particular resource.

The method may further comprise: receiving a search query; obtaining search results for the search query, wherein each of the search results identifies a respective resource, and wherein a particular search result identifies the particular resource; and determining that the search query has been classified as being submitted by a mobile device. In response to determining that the search query has been classified as being submitted by a mobile device, it may be determined whether the mobile-friendliness score for the particular resource exceeds a threshold score; and in response to determining that the mobile-friendliness score exceeds the threshold score, modifying the particular search result that identifies the particular resource to include an indication that the particular resource is mobile-friendly.

The method may further comprise receiving a request to analyze the particular resource for mobile-friendliness; generating a mobile-friendliness analysis from the mobile-friendliness score for the particular resource; and providing the mobile-friendliness analysis for presentation to a user.

The mobile-friendliness analysis may comprise data identifying one or more of the signal scores for the particular resource.

The mobile-friendliness analysis may comprise data derived from one or more of the signal scores for the particular resource that identifies a suggested modification to the particular resource that would increase the mobile-friendliness score for the particular resource.

According to a second aspect described herein, there is provided a method comprising: receiving a search query; obtaining search results for the search query, wherein each of the search results identifies a respective search result resource; obtaining a respective initial score for each of the search result resources; determining that the search query has been classified as being submitted by a mobile device, In response to determining that the search query has been classified as being submitted by a mobile device: a respective mobile-friendliness score for each of the search result resources is identified from an index that associates resources with mobile-friendliness scores for the resources, wherein the respective mobile-friendliness score for each of the search result resources represents a degree to which the search result resource has been optimized for viewing on mobile devices; and the respective initial score for each of the search result resources is adjusted using the respective mobile-friendliness scores for the search result resource to generate a respective modified score for the search result resource.

The method may further comprise ranking the search results according to the modified scores for the search result resources; and providing the search results for presentation to a user in accordance with the ranking.

The method may further comprise making further adjustments to the modified scores before providing the search results for presentation.

According to a third aspect described herein, there is provided a system comprising one or more computers and one or more storage devices storing instructions that when executed by the one or more computers cause the one or more computers to perform the method of the first or second aspects.

According to a fourth aspect described herein, there is provided a computer program product encoded on one or more non-transitory computer storage mediums, the computer program product comprising instructions that when executed by one or more computers cause the one or more computers to perform the method of the first or second aspects.

The details of one or more embodiments of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 shows an example search system.
FIG. 2 is a flow diagram of an example process for computing a mobile-friendliness score for a resource.
FIG. 3 is a flow diagram of an example process for adjusting initial search result ranking scores for resources using a mobile-friendliness score.
FIG. 4A is a flow diagram of an example process for modifying search results to indicate mobile-friendliness.
FIG. 4B shows an example search results presentation.
FIG. 5A is a flow diagram of an example process for analyzing a resource for mobile-friendlines s.
FIG. 5B shows an example mobile-friendliness analysis presentation.

Like reference numbers and designations in the various drawings indicate like elements.

### DETAILED DESCRIPTION

This specification generally describes a system that generates mobile-friendliness scores for resources. The mobile-friendliness score for a resource represents the degree to which the resource has been optimized for viewing and control on mobile devices. Once the mobile-friendliness score for a resource has been generated, the system can use the score for any of a variety of purposes. For example, the system can use the score in ranking search results. As another example, the system can use the score to modify search results to indicate that certain search results identify mobile-friendly resources. As another example, the system can use the score in providing results of a mobile-friendliness analysis to users.

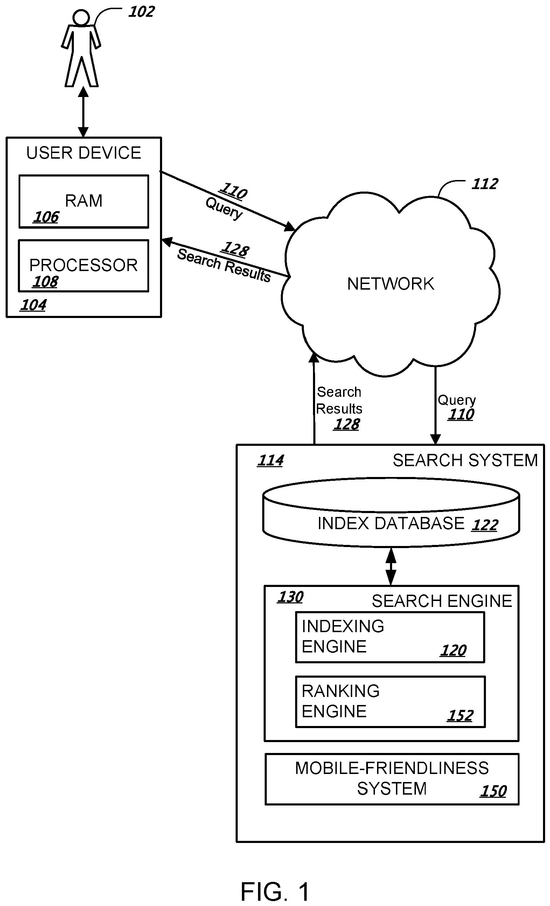

FIG. 1 shows an example search system 114. The search system 114 is an example of an information retrieval system implemented as computer programs on one or more computers in one or more locations, in which the systems, components, and techniques described below are implemented.

A user 102 can interact with the search system 114 through a user device 104. The user device 104 will generally include a memory, e.g., a random access memory (RAM) 106, for storing instructions and data and a processor 108 for executing stored instructions. The memory can include both read only and writable memory. For example, the user device 104 can be a computer, e.g., a smartphone or other mobile device, coupled to the search system 114 through a data communication network 112, e.g., local area network (LAN) or wide area network (WAN), e.g., the Internet, or a combination of networks, any of which may include wireless links.

In some implementations, the search system 114 provides a user interface to the user device 104 through which the user 102 can interact with the search system 114. For example, the search system 114 can provide a user interface in the form of web pages that are rendered by a web browser running on the user device 104, in an app installed on the user device 104, e.g., on a mobile device, or otherwise.

A user 102 can use the user device 104 to submit a query 110 to the search system 114. A search engine 130 within the search system 114 performs a search to identify resources matching the query. When the user 102 submits a query 110, the query 110 may be transmitted through the network 112 to the search system 124. The search system 114 includes an index 122 and the search engine 130. The search system 114 responds to the search query 110 by generating search results 128, which are transmitted through the network 112 to the user device 104 for presentation to the user 102, e.g., as a search results web page to be displayed by a web browser running on the user device 104.

When the query 110 is received by the search engine 130, the search engine 130 identifies resources that satisfy the query 110. The search engine 130 will generally include an indexing engine 120 that indexes resources, an index database 122 that stores the index information, and a ranking engine 152 or other software that generates scores for the resources that satisfy the query 110 and that ranks the resources according to their respective scores.

The search system 114 includes or can communicate with a mobile-friendliness system 150. After a given resource has been crawled by the search engine 130, the mobile-friendliness system 150 can analyze the resource to determine a mobile-friendliness score for the resource. The mobile-friendliness score represents a degree to which the resource has been optimized for viewing on mobile devices.

Generally, a mobile device is a user computer with a reduced viewing area, e.g., that has a small display size, that is capable of receiving and interacting with resources over a network. The viewing area necessary to qualify a device as a mobile device may be different in different implementations. For example, some implementations may focus on optimizing for smart phones, e.g., devices with a display size of 5 inches or smaller. Some other implementations may also focus on optimizing for certain sizes of tablets, e.g., devices with a display size of 7 inches or smaller. Yet other implementations may focus on optimizing for smartwatches or other wearables, e.g., devices with a display size of 50 mm or smaller. In some implementations, the requirements for qualification as a mobile device by the system may be provided as adjustable parameters by a system administrator or other entity.

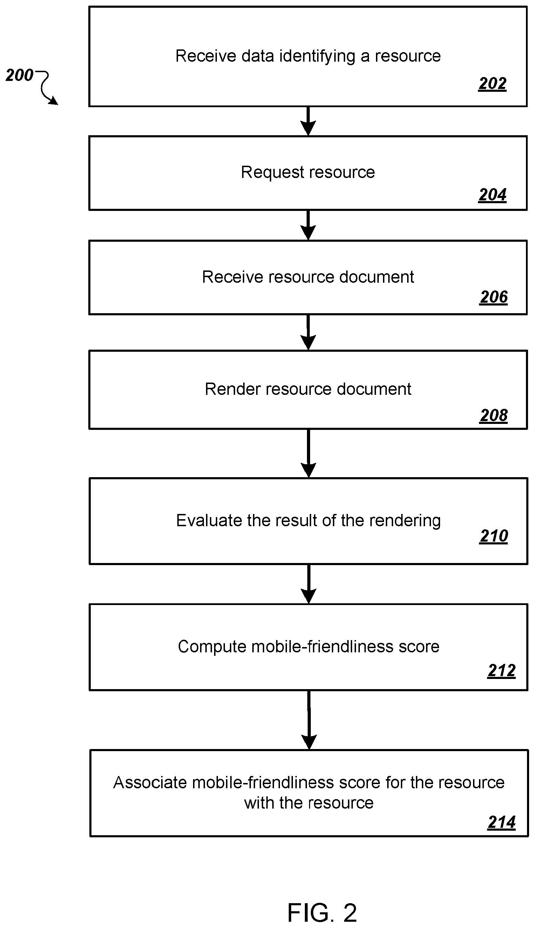

The mobile-friendliness system 150 can associate the mobile-friendliness score for the resource with the resource in a search engine index, e.g., in the index 122 or in another index accessible to the search system 114. Generating a mobile-friendliness score for a resource is described in more detail below with reference to FIG. 2.

Once a resource has been associated with a mobile-friendliness score, the mobile-friendliness system 150 can use the score for any of a variety of purposes.

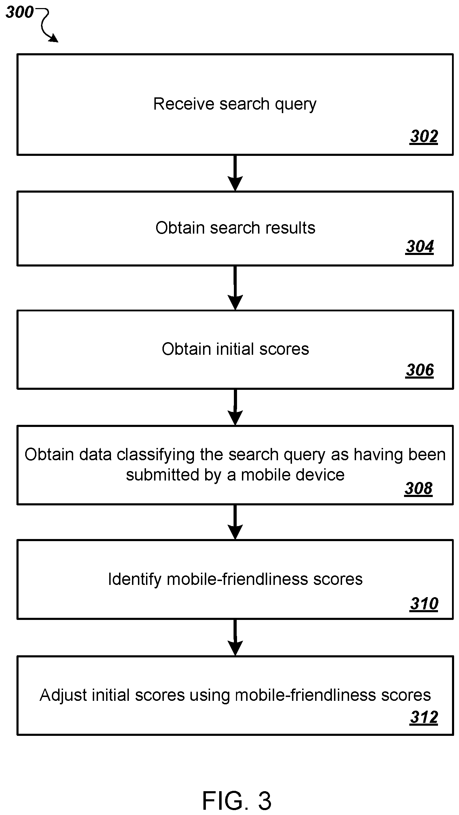

For example, when a search query is received by the search system 114, the search system 114 can determine whether the search query was received from a mobile device, e.g., from data received with the search query characterizing the device that submitted the search query, and provide data to the mobile-friendliness system 150 classifying the search query as having been submitted by a mobile device. In response to receiving the data, the mobile-friendliness system 150 can use the mobile-friendliness scores to modify scores generated by the search engine 130 for resources identified by search results for the search query. Modifying scores using mobile-friendliness scores is described below with reference to FIG. 3.

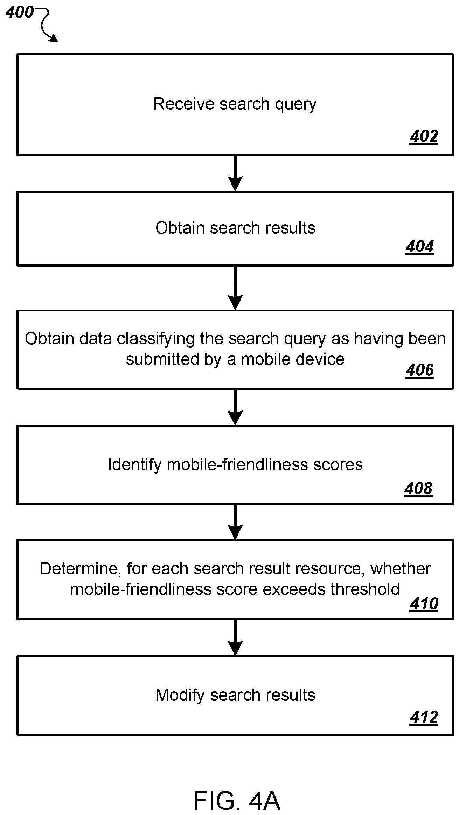

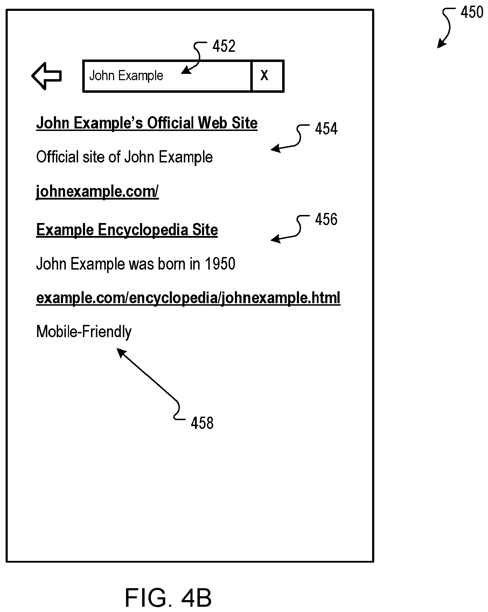

As another example, in response to receiving the data classifying the search query as having been submitted by a mobile device, the mobile-friendliness system 150 can use the mobile-friendliness scores to modify certain ones of the search results for the search query to include an indication that the resource identified by the search result is mobile-friendly. Modifying search results using mobile-friendliness scores is described below with reference to FIGS. 4A and 4B.

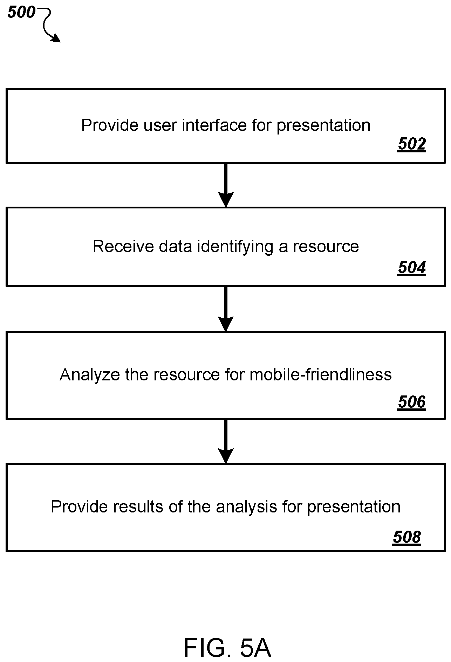

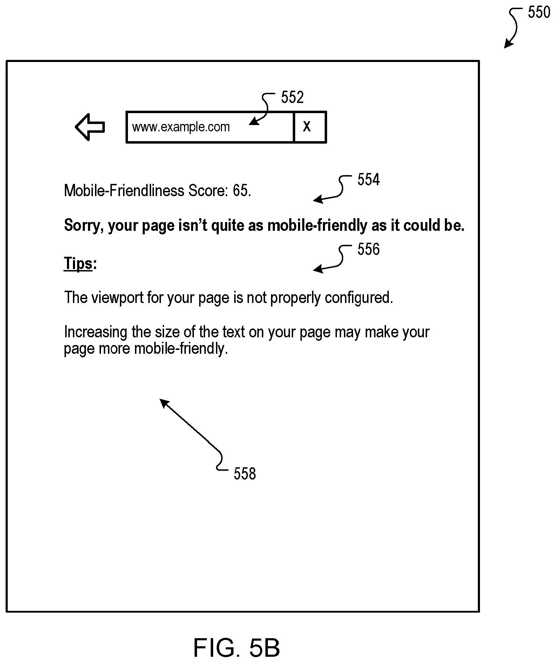

As another example, the mobile-friendliness system 150 can allow users to submit data identifying resources, e.g., uniform resource locators (URLs) of the resources, and, in response, can use the mobile friendliness scores to provide information identifying whether or not the identified resource is mobile-friendly, to provide information identifying how the resources' mobile-friendliness scores may be improved, or both. Analyzing the mobile-friendliness of a resource in response to a user request using mobile-friendliness scores is described below with reference to FIGS. 5A and 5B.

FIG. 2 is a flow diagram of an example process 200 for computing a mobile-friendliness score for a resource. For convenience, the process 200 will be described as being performed by a system of one or more computers located in one or more locations. For example, a search system, e.g., the search system 114 of FIG. 1, appropriately programmed in accordance with this specification, can perform the process 200.

The system receives data identifying a resource (step 202). For example, the system can obtain data identifying resources that have been crawled by a search engine and calculate a mobile-friendliness score for each of the identified resources.

The system requests the resource from the site that hosts the resource (step 204). In particular, the system requests the resource from the site as a mobile agent. That is, the system indicates to the site that the resource is being requested for presentation on a mobile device.

The system receives a resource document from the site in response to the request (step 206).

The system renders the resource document (step 208) using a headless browser. Generally, a headless browser is a web browser without a graphical user interface. That is, the headless browser renders the resource document to generate a rendered resource document but then stores the rendered resource document rather than providing the rendered document for presentation in a graphical user interface. Rendering the resource document may include considering external resources of the resource document, executing any JavaScript required by the resource document, and applying any Cascading Style Sheets (CSS) included in the resource document.

The system evaluates the result of the rendering to determine a respective signal score for each of one or more mobile-friendliness signals (step 210). That is, the system analyzes the rendered resource document and, optionally, data in the resource document before it was rendered in order to determine the signal scores. The mobile-friendliness score can be based on an evaluation of any of a variety of mobile-friendliness signals.

For example, the mobile-friendliness signals can include a plugin signal. Because many plugins are not supported by mobile devices, the score for the plugin signal is dependent on the amount of content of the rendered resource document that requires a plugin to display. In particular, the system may determine the proportion of the content in the rendered document that requires a plugin and compute the score from the proportion, e.g., the score may be equal to or proportional to the determined proportion. In some implementations, the proportion of content in the rendered document may be measured in terms of area in the rendered document, i.e., so that the proportion of content that requires a plugin is the proportion of the total area of the rendered document that includes content requiring a plugin. In some implementations, the system maintains data identifying particular plugins, i.e., non-standard plugins, plugins associated with rendering problems or having other undesirable characteristics, or plugins known to not be commonly supported by mobile devices. In some of these implementations, the system can consider only the amount of content that requires one of these particular plugins to display. In some of these implementations, instead of or in addition to being dependent on the amount of content of the rendered resource document that requires a plugin to display, the signal score for the plugin signal can be dependent on how many of the particular plugins are required to properly render the resource document, with resources requiring more of the particular plugins receiving higher signal scores.

As another example, the mobile-friendliness signals can include a viewport configuration signal. The score for the viewport configuration signal is dependent on how, if at all, the resource document configures the viewport for the document. In particular, the viewport controls how the document is displayed on different devices and is generally configured using a tag, e.g., a meta viewport tag, in the head of the document or another portion of the document. In particular, if no tag is included, no viewport is specified for the document, and mobile devices generally will render the page at a fallback width that is suboptimal for viewing on the mobile device, e.g., because it will require users to zoom to interact with or properly view the document. If a tag is included in the document, the tag may set the viewport to a specific width or may instruct the mobile device rendering the document to set the viewport to adapt to the device on which the document is being rendered, e.g., by matching the width of the document to the width of the display of the mobile device in device independent pixels. In some implementations, in order to determine the signal score for the viewport configuration signal, the system maintains a mapping between multiple possible viewport configurations and signal scores, e.g., no viewport specified may be mapped to a first score, one or more possible fixed width viewports may each be mapped to a respective second score, and viewports that adapt to different devices may be mapped to a third score. In some implementations, viewports that adapt to different devices may be mapped to the lowest score and no viewport being specified may be mapped to the highest score.

As another example, the mobile-friendliness signals can include a viewable area signal. The score for the viewable area signal is dependent on how much of the total content area of the document is visible. In some implementations, the system computes the proportion of the total content area that is visible after the document has been rendered and determines the score for the viewable area signal from the proportion, with higher proportions being assigned lower signal scores and lower proportions being assigned higher signal scores. For example, the signal score may be proportional to the inverse of the viewable proportion or may be proportional to (1 - viewable proportion).

The mobile-friendliness signals include a tap target signal. A tap target is a button, link, form field, or other user interface element that is configured to be selectable by or interact-able with by a user viewing the document. The score for the tap target signal is dependent on whether tap targets in the rendered document are too close together, are too small to be interacted with effectively, or both. When the score for the tap target signal is dependent on how many tap targets are too close together, the system determines a count of tap targets that are within a threshold distance of another tap target in the rendered document. When the score for the tap target signal is dependent on how many tap targets are too small, the system determines a count of tap targets that are less than a threshold size in the rendered document. The system then computes the score for the tap target signal from the count or counts, with documents having larger counts being assigned larger signal scores. For example, the score for the tap target signal may be proportional to the sum of the counts.

As another example, the mobile-friendliness signals can include a text size signal. The score for the text size signal is dependent on how much of the text of the document is too small to be effectively viewed on a mobile device. In some implementations, the system computes the proportion of the total text in the rendered resource document that is less than a threshold size and determines the score for the viewable area signal from the proportion, with higher proportions being assigned higher signal scores and lower proportions being assigned lower signal scores. For example, the signal score may be proportional to the too small proportion.

As another example, the mobile-friendliness signals can include a resource load speed signal that measures how quickly the resource loads. For example, the resource load speed can be computed based on the time it took from the time that the resource document was requested to the time that the resource document was fully rendered by the system. As another example, the resource load speed can be computed from a sample of load times for the resource. Generally, the longer the load time for the resource, the higher the signal score for the resource load speed signal. For example, the signal score can be proportional to the load time.

As another example, the mobile-friendliness signals can include a data usage signal that measures how much data is required to be received by the system over a network to properly render the resource. The received data may include the resource document received from the host site and, optionally, any external data required to be requested and received from external resources in order to properly render the resource. Generally, the more data that is required, the higher the signal score for the data usage signal. For example, the signal score may be proportional to the amount of data that is required.

As another example, the mobile-friendliness signals can include a processor load signal that measures how much processing power is required to properly render the resource, to scroll or interact with the resource, or both. Generally, the more processing power that is required, the higher the signal score for the processor load signal. For example, the signal score may be proportional to the amount of processing power required.

It will be appreciated that the above is merely a partial list of possible signals, and many additional possible signals exist. In various implementations, additional signals or alternative signals may be included with or in place of those identified above, and inclusion of those additional signals or absence of those listed above is contemplated herein. Additionally, not all of the signals listed above need be included in computing mobile-friendliness scores.

The system computes a mobile-friendliness score for the resource from the one or more signal scores (step 212). In particular, to compute the mobile-friendliness score for the resource, the system combines the signal scores, e.g., by computing a sum, weighted sum, product, weighted product, a measure of central tendency of the signal scores, and so on, to generate an overall signal score for the resource. The system then computes the mobile-friendliness score from the signal scores, with higher mobile-friendliness scores indicating a higher degree of optimization for viewing on mobile devices. In some implementations, the system applies a squashing function to the overall signal score to map the signal score to a predetermined range, e.g., 0 to 25, 0 to 50, 0 to 100, or 0 to 1000, and then subtracts the output of the squashing function from the largest number in the range to determine the mobile-friendliness score.

The system associates the mobile-friendliness score for the resource with the resource in an index (step 214), e.g., an index of a search engine or a different index maintained by the system. In some implementations, the system also stores the signal scores for the various mobile-friendliness signals for the resource in the index.

Once the resource has been associated with a score, the system can use the score in ranking search results for search queries that have been classified as being submitted from a mobile device. Using the score to adjust search result rankings is described below with reference to FIG. 3.

As another example, the system can use the score to modify certain search results to indicate that the search results identify resources that are mobile-friendly. Modifying search results using the score is described in more detail below with reference to FIGS. 4A and 4B.

FIG. 3 is a flow diagram of an example process 300 for adjusting initial search result ranking scores for resources using mobile-friendliness scores. For convenience, the process 300 will be described as being performed by a system of one or more computers located in one or more locations. For example, a search system, e.g., the search system 114 of FIG. 1, appropriately programmed in accordance with this specification, can perform the process 300.

The system receives a search query (step 302).

The system obtains search results for the search query from a search engine (step 304). Each of the search results identifies a respective search result resource.

The system obtains a respective initial ranking score for each of the search result resources (step 306). The initial ranking score for a given search result resource is generated for the search result resource by the search engine and may represent the quality of the search result resource, the relevance of the search result resource to the search query, or both.

The system obtains data classifying the search query as having been submitted to the search engine by a mobile device (step 308). For example, when the query is received by the search engine, the search engine may classify the search query as having been received by a mobile device from information that is received with the search query, i.e., information characterizing the device that submitted the search query.

The system identifies, for each of the search result resources, the mobile-friendliness score that is associated with the search result resource in a search engine index (step 310). The mobile-friendliness score for a given search result resource represents the degree to which the resource has been optimized for viewing on a mobile device, determined, for example, as described above with reference to FIG. 2.

The system adjusts the initial ranking score for each of the search result resources using the mobile-friendliness scores for the search result resource to generate a modified score for each of the search result resources (step 312). For example, the system can multiply the initial ranking score for the search result resource by the mobile-friendliness score for the search result resource or add the mobile-friendliness score to the initial ranking score to generate the modified score for the search result resource. In some implementations, prior to using the mobile-friendliness score to adjust the initial ranking score, the system scales the mobile-friendliness score, e.g., by applying a squashing function to the mobile-friendliness score to map the score to a predetermined range or by scaling the mobile-friendliness score by a predetermined constant factor.

In some implementations, the system ranks the search results according to the modified scores for the resources identified by the search results and then provides the search results for presentation to a user ordered according to the ranking. In some other implementations, the system makes further adjustments to the modified scores before ranking the search results and providing them for presentation or provides the modified scores to a different system that further adjusts the modified scores prior to ranking the search results.

FIG. 4A is a flow diagram of an example process 400 for modifying search results to indicate mobile-friendliness. For convenience, the process 400 will be described as being performed by a system of one or more computers located in one or more locations. For example, a search system, e.g., the search system 114 of FIG. 1, appropriately programmed in accordance with this specification, can perform the process 400.

The system receives a search query (step 402) and obtains search results for the search query from a search engine (step 404).

The system obtains data classifying the search query as having been submitted to the search engine by a mobile device (step 406).

The system identifies, for each of the search result resources, the mobile-friendliness score that is associated with the search result resource in a search engine index (step 408). The mobile-friendliness score may be determined, for example, as described above with respect to FIG. 2.

The system determines, for each of the search result resources, whether the mobile-friendliness score for the search result resource exceeds a threshold value (step 410). The predetermined threshold value may be specified, e.g., by a system administrator or other entity, and may represent a score that a resource's mobile-friendliness score must exceed in order for the resource to be classified as being mobile-friendly.

The system modifies each search result that identifies a search result resource having a mobile-friendliness score that exceeds the threshold value to indicate that the resource identified by the search result is mobile device friendly, i.e., has been optimized for viewing on a mobile device (step 412). For example, the system can modify the search result to include the text "Mobile-Friendly" or to include a badge or other icon that is associated with mobile device friendly resources.

Once the search results have been modified, the system provides the search results for presentation to a user, e.g., on the mobile device from which the search query was received. In particular, when presented on the mobile device, the modified search results include the indication that the resource identified by the search result is mobile-friendly. Although it will be appreciated that, in some implementations, a modifier indicating that a resource identified by the search result is mobile-friendly may be presented on any display device, mobile or otherwise.

In some implementations, the system both adjusts the scores for search result resources using mobile-friendliness scores and modifies search results to indicate mobile-friendliness.

FIG. 4B shows an example search results presentation 450. The example search results presentation 450 is presented on a display device, e.g., a mobile device, and shows search results for a query "John Example" 452. In particular, the search results presentation 450 shows two search results 454 and 456 provided by a search system in response to the query 452. The search result 454 identifies a resource johnexample.com and includes a snippet of text describing the resource and a link to the resource. The search result 456 identifies a resource example.com/encyclopedia/johnexample.html and also includes a snippet of text describing the resource and a link to the resource. However, unlike the search result 454, the search result 456 includes an indication 458 of mobile-friendliness. In particular, when generating the search results for the query 452, the search system determined that the resource
example, com/encyclopedia/johnexample.html had a mobile-friendliness score that exceeded a threshold value while the mobile friendliness score for the resource johnexample.com did not exceed the threshold value. In response, the search system modified the search result 456 to include the indication 458 while not modifying the search result 454. While in the example of FIG. 4B, the indication 458 is the text "Mobile-Friendly," the indication 458 may instead be, e.g., a badge or other icon that is associated with mobile device friendly resources, other text indicating that the resource is mobile-friendly, and so on.

FIG. 5A is a flow diagram of an example process 500 for analyzing a resource for mobile-friendliness. For convenience, the process 500 will be described as being performed by a system of one or more computers located in one or more locations. For example, a search system, e.g., the search system 114 of FIG. 1, appropriately programmed in accordance with this specification, can perform the process 500.

The system provides a user interface for presentation on a user device that allows a user to input a resource identifier for a resource that the user would like analyzed for mobile-friendliness (step 502).

The system receives a resource identifier, e.g., a URL, of a resource through the user interface (step 504).

The system analyzes the identified resource for mobile-friendliness (step 506). In some implementations, the system accesses an index that associates resources with mobile-friendliness scores for the resources and, optionally, signal scores for mobile-friendliness signals for the resources. The system determines, from the index, whether the resource has already been analyzed for mobile-friendliness and, if so, generates the results of the mobile-friendliness analysis from the data in the index. If the resource has not already been analyzed for mobile friendliness and in implementations where the system does not check the index, the system analyzes the resource for mobile-friendliness as described above with reference to FIG. 2.

The system provides the results of the analysis for presentation to the user in the user interface (step 508). In some implementations, the system provides data identifying the mobile-friendliness score for the identified resource. Instead of or in addition to providing data identifying the mobile-friendliness score, the system can provide an indication of whether the resource is mobile-friendly. The system can determine that the resource is mobile-friendly when the mobile-friendliness score for the resource exceeds a threshold value.

In some implementations, the system also provides an analysis of the signal scores for the mobile-friendliness signals for the resource. For example, the system can provide data identifying the signal score for each mobile-friendliness signal. As another example, the system can provide data that identifies which signals indicate that the resource is mobile-friendly, which signals indicate that the resource is not mobile-friendly, or both. As yet another example, the system can provide data derived from the signal scores that identifies modifications that can be made to the resource to increase the mobile-friendliness score for the resource, i.e., information identifying suggested modifications that would result in an increase in the mobile-friendliness score. For example, if the signal score for the text size signal exceeds a threshold score, the system can include in the analysis an indication that the size of the text in the resource should be increased in order to make the resource more mobile-friendly.

FIG. 5B shows an example mobile-friendliness analysis presentation 550. The mobile-friendliness analysis presentation 550 was generated by a search system in response to a user request. In particular, the presentation 550 is an analysis of a resource www.example.com, as requested by a user by inputting the URL for the resource into a field 552 in the presentation 550. The presentation 550 includes information 554 characterizing the mobile-friendliness score for the resource as computed by the search system. In the example of FIG. 5B, the information 554 includes the mobile-friendliness score for the resource ("65") and text characterizing the mobile-friendliness score ("Sorry, your page isn't quite as mobile-friendly as it could be."). The presentation 550 also includes information 556 characterizing one of the signal scores for the resource. In particular, in the example of FIG. 5B, the information 556 characterizes the score for the viewport configuration signal that indicates that the viewport is not properly configured ("The viewport for your page is not properly configured."). The presentation 550 also includes information 558 derived from the signal scores that identifies a modification that can be made to the resource to increase the mobile-friendliness score for the resource. In the example of FIG. 5B, the information 558 is derived from the signal score for the text size signal and specifies that increasing the size of the text of the resource would increase the mobile-friendliness score ("Increasing the size of the text on your page may make your page more mobile-friendly.").

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory program carrier for execution by, or to control the operation of, data processing apparatus. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus. The computer storage medium can be a machine-readable storage device, a machine-readable storage substrate, a random or serial access memory device, or a combination of one or more of them.

The term "data processing apparatus" encompasses all kinds of apparatus, devices, and machines for processing data, including by way of example a programmable processor, a computer, or multiple processors or computers. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a database management system, an operating system, or a combination of one or more of them.

A computer program (which may also be referred to or described as a program, software, a software application, a module, a software module, a script, or code) can be written in any form of programming language, including compiled or interpreted languages, or declarative or procedural languages, and it can be deployed in any form, including as a standalone program or as a module, component, subroutine, or other unit suitable for use in a computing environment. A computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, subprograms, or portions of code. A computer program can be deployed to be executed on one computer or on multiple computers that are located at one site or distributed across multiple sites and interconnected by a communication network.

The processes and logic flows described in this specification can be performed by one or more programmable computers executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application-specific integrated circuit).

Computers suitable for the execution of a computer program include, by way of example, can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of nonvolatile memory, media and memory devices, including by way of example semiconductor memory devices, e.g., EPROM, EEPROM, and flash memory devices; magnetic disks, e.g., internal hard disks or removable disks; magnetooptical disks; and CDROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's user device in response to requests received from the web browser.

Embodiments of the subject matter described in this specification can be implemented in a computing system that includes a backend component, e.g., as a data server, or that includes a middleware component, e.g., an application server, or that includes a frontend component, e.g., a client computer having a graphical user interface or a Web browser through which a user can interact with an implementation of the subject matter described in this specification, or any combination of one or more such backend, middleware, or frontend components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

## Claims

1. A method comprising:
obtaining data identifying a particular resource;
submitting a request for the particular resource to a site hosting the particular resource;
receiving (206), in response to the request, a resource document from the site hosting the particular resource;
rendering (208) the resource document, using a headless browser, to generate a rendered resource document;
evaluating (210) a result of the rendering by analyzing the rendered resource document to determine a respective signal score for each of one or more mobile-friendliness signals, wherein evaluating the result of the rendering comprises
determining a signal score for a tap target signal from a count of tap targets in the rendered resource document that are within a threshold distance of another tap target in the rendered resource document, and/or
determining a signal score for a tap target signal from a count of tap targets in the rendered resource document that are smaller than a threshold size in the rendered resource document;
computing (212) a mobile-friendliness score for the particular resource from the one or more signal scores, wherein the mobile-friendliness score represents a degree to which the particular resource has been optimized to be viewed on a mobile device; and
associating (214) the mobile-friendliness score for the particular resource with the particular resource in an index.

2. The method of claim 1, wherein submitting the request for the resource to the site hosting the resource comprises:
submitting the request as a mobile agent.

3. The method of claim 1 or 2, wherein computing (212) the mobile-friendliness score for the particular resource comprises:
combining the one or more signal scores to generate an overall score; and
generating the mobile-friendliness score from the overall score.

4. The method of claim 1, 2 or 3, wherein evaluating (210) the result of the rendering comprises:
determining a signal score for a plugin signal from an amount of content of the rendered resource document that requires a plugin to display.

5. The method of any preceding claim, wherein evaluating the result of the rendering further comprises:
determining a signal score for a viewport configuration signal from how the resource document configures a viewport for the resource document; and/or
determining a signal score for a viewable area signal from a proportion of a total content area of the rendered resource document that is visible.

6. The method of any preceding claim, wherein evaluating (210) the result of the rendering comprises:
determining a signal score for a text size signal from a proportion of a total text in the rendered resource document that is smaller than a threshold text size.

7. The method of any preceding claim, further comprising:
receiving (302) a search query;
obtaining (304) search results for the search query, wherein each of the search results identifies a respective resource, and wherein a particular search result identifies the particular resource;
determining that the search query has been classified as being submitted by a mobile device; and
in response to determining that the search query has been classified as being submitted by a mobile device, modifying the search results based upon the mobile-friendliness scores of at least one of the respective resources.

8. The method of claim 7, further comprising:
obtaining (306) a respective initial ranking score for each of the resources identified by the search results; and
wherein modifying the search results comprises adjusting the initial ranking score for a particular resource using the mobile-friendliness score for the particular resource to generate a modified ranking score for the particular resource.

9. The method of claim 7, further comprising:
in response to determining that the search query has been classified as being submitted by a mobile device:
determining that the mobile-friendliness score for the particular resource exceeds a threshold score; and
in response to determining that the mobile-friendliness score exceeds the threshold score, modifying the particular search result that identifies the particular resource to include an indication that the particular resource is mobile-friendly.

10. The method of any preceding claim, further comprising:
receiving a request to analyze the particular resource for mobile-friendliness;
generating a mobile-friendliness analysis from the mobile-friendliness score for the particular resource; and
providing the mobile-friendliness analysis for presentation to a user.

11. The method of claim 10, wherein the mobile-friendliness analysis comprises data identifying one or more of the signal scores for the particular resource.

12. The method of claim 10, wherein the mobile-friendliness analysis comprises data derived from one or more of the signal scores for the particular resource that identifies a suggested modification to the particular resource that would increase the mobile-friendliness score for the particular resource.

13. The method of claim 8, further comprising:
ranking the search results according to the modified ranking score for the particular resources; and
providing the search results for presentation to a user in accordance with the ranking.

14. A system comprising one or more computers and one or more storage devices storing instructions that when executed by the one or more computers cause the one or more computers to perform the method of any preceding claim.

15. A computer program product encoded on one or more non-transitory computer storage mediums, the computer program product comprising instructions that when executed by one or more computers cause the one or more computers to perform the method of any of claims 1 to 13.

## Patentansprüche

1. Verfahren, umfassend:
Erhalten von Daten, die eine bestimmte Ressource identifizieren;
Einreichen einer Anfrage für die bestimmte Ressource bei einer Seite, welche die bestimmte Ressource hostet;
Empfangen (206), als Reaktion auf die Anfrage, eines Ressourcendokuments von der Seite, welche die bestimmte Ressource hostet;
Rendern (208) des Ressourcendokuments unter Verwendung eines kopflosen Browsers, um ein gerendertes Ressourcendokument zu erzeugen;
Auswerten (210) eines Ergebnisses des Renderns durch Analysieren des gerenderten Ressourcendokuments, um eine jeweilige Signalbewertung für jedes von einem oder mehreren Mobilfreundlichkeitssignalen zu bestimmen, wobei das Auswerten des Ergebnisses des Renderns Folgendes umfasst:
Bestimmen einer Signalbewertung für ein Zapfzielsignal von einer Anzahl an Zapfzielen in dem gerenderten Ressourcendokument, die sich innerhalb eines Schwellenabstands zu einem anderen Zapfziel in dem gerenderten Ressourcendokument befinden, und/oder
Bestimmen einer Signalbewertung für ein Zapfzielsignal von einer Anzahl an Zapfzielen in dem gerenderten Ressourcendokument, die kleiner als eine Schwellengröße in dem gerenderten Ressourcendokument sind;
Berechnen (212) einer Mobilfreundlichkeitsbewertung für die bestimmte Ressource aus der einen oder den mehreren Signalbewertungen, wobei die Mobilfreundlichkeitsbewertung einen Grad darstellt, in dem die bestimmte Ressource optimiert worden ist, um auf einer mobilen Vorrichtung angezeigt zu werden; und
Verbinden (214) der Mobilfreundlichkeitsbewertung für die bestimmte Ressource mit der bestimmten Ressource in einem Index.

2. Verfahren nach Anspruch 1, wobei das Einreichen der Anfrage für die Ressource bei der Seite, welche die Ressource hostet, Folgendes umfasst:
Einreichen der Anfrage als mobiler Agent.

3. Verfahren nach Anspruch 1 oder 2, wobei das Berechnen (212) der Mobilfreundlichkeitsbewertung für die bestimmte Ressource Folgendes umfasst:
Kombinieren der einen oder der mehreren Signalbewertungen, um eine Gesamtbewertung zu erzeugen; und
Erzeugen der Mobilfreundlichkeitsbewertung aus der Gesamtbewertung.

4. Verfahren nach Anspruch 1, 2 oder 3, wobei das Auswerten (210) des Ergebnisses des Renderns Folgendes umfasst:
Bestimmen einer Signalbewertung für ein Plugin-Signal aus einer Menge an Inhalt des gerenderten Ressourcendokuments, das ein Plugin zum Anzeigen erfordert.

5. Verfahren nach einem vorhergehenden Anspruch, wobei das Auswerten des Ergebnisses des Renderns ferner Folgendes umfasst:
Bestimmen einer Signalbewertung für ein Ansichtsfensterkonfigurationssignal daraus, wie das Ressourcendokument ein Ansichtsfenster für das Ressourcendokument konfiguriert; und/oder
Bestimmen einer Signalbewertung für ein sichtbares Bereichssignal aus einem Anteil eines Gesamtinhaltsbereichs des gerenderten Ressourcendokuments, der sichtbar ist.

6. Verfahren nach einem vorhergehenden Anspruch, wobei das Auswerten (210) des Ergebnisses des Renderns Folgendes umfasst:
Bestimmen einer Signalbewertung für ein Textgrößensignal aus einem Anteil eines Gesamttexts in dem gerenderten Ressourcendokument, der kleiner als eine Schwellentextgröße ist.

7. Verfahren nach einem vorhergehenden Anspruch, ferner umfassend:
Empfangen (302) einer Suchabfrage;
Erhalten (304) von Suchergebnissen für die Suchabfrage, wobei jedes der Suchergebnisse eine jeweilige Ressource identifiziert, und wobei ein bestimmtes Suchergebnis die bestimmte Ressource identifiziert;
Bestimmen, dass die Suchabfrage als durch eine mobile Vorrichtung eingereicht klassifiziert worden ist; und
als Reaktion auf das Bestimmen, dass die Suchabfrage als durch eine mobile Vorrichtung eingereicht klassifiziert worden ist, Modifizieren der Suchergebnisse basierend auf den Mobilfreundlichkeitsbewertungen von zumindest einer der jeweiligen Ressourcen.

8. Verfahren nach Anspruch 7, ferner umfassend:
Erhalten (306) einer jeweiligen anfänglichen Ranglistenbewertung für jede der durch die Suchergebnisse identifizierten Ressourcen; und
wobei das Modifizieren der Suchergebnisse das Anpassen der anfänglichen Ranglistenbewertung für eine bestimmte Ressource unter Verwendung der Mobilfreundlichkeitsbewertung für die bestimmte Ressource umfasst, um eine modifizierte Ranglistenbewertung für die bestimmte Ressource zu erzeugen.

9. Verfahren nach Anspruch 7, ferner umfassend:
als Antwort auf das Bestimmen, dass die Suchabfrage als durch eine mobile Vorrichtung eingereicht klassifiziert worden ist:
Bestimmen, dass die Mobilfreundlichkeitsbewertung für die bestimmte Ressource eine Schwellenwertbewertung überschreitet; und
als Reaktion auf das Bestimmen, dass die Mobilfreundlichkeitsbewertung die Schwellenwertbewertung überschreitet, Modifizieren des bestimmten Suchergebnisses, das die bestimmte Ressource identifiziert, um eine Angabe einzuschließen, dass die bestimmte Ressource mobilfreundlich ist.

10. Verfahren nach einem vorhergehenden Anspruch, ferner umfassend:
Empfangen einer Anfrage, die bestimmte Ressource auf Mobilfreundlichkeit zu analysieren;
Erzeugen einer Mobilfreundlichkeitsanalyse aus der Mobilfreundlichkeitsbewertung für die bestimmte Ressource; und
Bereitstellen der Mobilfreundlichkeitsanalyse zur Präsentation an einen Benutzer.

11. Verfahren nach Anspruch 10, wobei die Mobilfreundlichkeitsanalyse Daten umfasst, die eine oder mehrere der Signalbewertungen für die bestimmte Ressource identifizieren.

12. Verfahren nach Anspruch 10, wobei die Mobilfreundlichkeitsanalyse Daten umfasst, die aus einer oder mehreren der Signalbewertungen für die bestimmte Ressource abgeleitet sind, die eine vorgeschlagene Modifikation der bestimmten Ressource identifizieren, welche die Mobilfreundlichkeitsbewertung für die bestimmte Ressource erhöhen würde.

13. Verfahren nach Anspruch 8, ferner umfassend:
Ordnen der Suchergebnisse gemäß der modifizierten Ranglistenbewertung für die bestimmten Ressourcen in einer Rangliste; und
Bereitstellen der Suchergebnisse zur Präsentation an einen Benutzer gemäß der Rangliste.

14. System, umfassend einen oder mehrere Computer und eine oder mehrere Speichervorrichtungen, die Anweisungen speichern, die, wenn sie durch den einen oder die mehreren Computern ausgeführt werden, den einen oder die mehreren Computer dazu veranlassen, das Verfahren nach einem vorhergehenden Anspruch durchzuführen.

15. Computerprogrammprodukt, das auf einem oder mehreren nichtflüchtigen Computerspeichermedien codiert ist, wobei das Computerprogrammprodukt Anweisungen umfasst, die, wenn sie durch einen oder mehrere Computer ausgeführt werden, den einen oder die mehreren Computer dazu veranlassen, das Verfahren nach einem der Ansprüche 1 bis 13 durchzuführen.

## Revendications

1. Procédé comprenant :
l'obtention de données identifiant une ressource particulière ;
la soumission d'une demande pour la ressource particulière à un site hébergeant la ressource particulière ;
la réception (206), en réponse à la demande, d'un document de ressources provenant du site hébergeant la ressource particulière ;
le rendu (208) du document de ressource, à l'aide d'un navigateur sans tête, pour générer un document de ressource rendu ;
l'évaluation (210) d'un résultat du rendu en analysant le document de ressources rendu pour déterminer une note de signal respective pour chacun d'un ou plusieurs signaux de convivialité mobile, ladite évaluation du résultat du rendu comprenant
la détermination d'une note de signal pour un signal cible de prise à partir d'un comptage de cibles de prise dans le document de ressource rendu qui sont dans les limites d'une distance seuil d'une autre cible de prise dans le document de ressource rendu, et/ou
la détermination d'une note de signal pour un signal de cible de prise à partir d'un compte de cibles de prise dans le document de ressource rendu qui sont plus petites qu'une taille seuil dans le document de ressource rendu ;
le calcul (212) d'une note de convivialité mobile pour la ressource particulière à partir du ou des notes de signal, ladite note de convivialité mobile représentant un degré auquel la ressource particulière a été optimisée pour être visualisée sur un dispositif mobile ; et
l'association (214) de la note de convivialité mobile pour la ressource particulière à la ressource particulière dans un index.

2. Procédé selon la revendication 1, ladite soumission de la demande de ressource au site hébergeant la ressource comprenant :
la soumission de la demande en tant qu'agent mobile.

3. Procédé selon la revendication 1 ou 2, ledit calcul (212) de la note de convivialité mobile pour la ressource particulière comprenant :
la combinaison du ou des notes de signal pour générer une note globale ; et
la génération de la note de convivialité mobile à partir de la note globale.

4. Procédé selon la revendication 1, 2 ou 3, ladite évaluation (210) du résultat du rendu comprenant :
la détermination d'une note de signal pour un signal de module d'extension à partir d'une quantité de contenu du document de ressource rendu qui nécessite un module d'extension pour l'affichage.

5. Procédé selon l'une quelconque des revendications précédentes, ladite évaluation du résultat du rendu comprenant en outre :
la détermination d'une note de signal pour un signal de configuration de clôture à partir de la manière dont le document de ressource configure une clôture pour le document de ressource ; et/ou
la détermination d'une note de signal pour un signal de zone visualisable à partir d'une proportion d'une zone de contenu totale du document de ressource rendu qui est visible.

6. Procédé selon l'une quelconque des revendications précédentes, ladite évaluation (210) du résultat du rendu comprenant :
la détermination d'une note de signal pour un signal de taille de texte à partir d'une proportion d'un texte total dans le document de ressource rendu qui est inférieure à une taille de texte seuil.

7. Procédé selon l'une quelconque des revendications précédentes, comprenant en outre :
la réception (302) d'une requête de recherche ;
l'obtention (304) des résultats de recherche pour la requête de recherche, chacun des résultats de recherche identifiant une ressource respective, et un résultat de recherche particulier identifiant la ressource particulière ;
la détermination que la requête de recherche a été classée comme étant soumise par un dispositif mobile ; et
en réponse à la détermination que la requête de recherche a été classée comme étant soumise par un dispositif mobile, la modification des résultats de recherche sur la base des notes de convivialité mobiles d'au moins l'une des ressources respectives.

8. Procédé selon la revendication 7, comprenant en outre :
l'obtention (306) d'une note de classement initiale respective pour chacune des ressources identifiées par les résultats de recherche ; et
ladite modification des résultats de recherche comprenant le réglage de la note de classement initiale pour une ressource particulière à l'aide de la note de convivialité mobile pour la ressource particulière afin de générer une note de classement modifiée pour la ressource particulière.

9. Procédé selon la revendication 7, comprenant en outre :
en réponse à la détermination que la requête de recherche a été classée comme étant soumise par un dispositif mobile :
la détermination que la note de convivialité mobile pour la ressource particulière dépasse une note seuil ; et
en réponse à la détermination que la note de convivialité mobile dépasse la note seuil, la modification du résultat de recherche particulier qui identifie la ressource particulière pour comprendre une indication que la ressource particulière est conviviale sur mobile.

10. Procédé selon l'une quelconque des revendications précédentes, comprenant en outre :
la réception d'une demande d'analyse de la ressource particulière pour la convivialité mobile ; la génération d'une analyse de convivialité mobile à partir de la note de convivialité mobile pour la ressource particulière ; et
la fourniture de l'analyse de convivialité mobile pour une présentation à un utilisateur.

11. Procédé selon la revendication 10, ladite analyse de convivialité mobile comprenant des données identifiant l'une ou plusieurs des notes de signal pour la ressource particulière.

12. Procédé selon la revendication 10, ladite analyse de convivialité mobile comprenant des données dérivées à partir d'une ou plusieurs des notes de signal pour la ressource particulière qui identifie une modification suggérée de la ressource particulière qui augmenterait la note de convivialité mobile pour la ressource particulière.

13. Procédé selon la revendication 8, comprenant en outre :
le classement des résultats de la recherche selon la note de classement modifiée pour les ressources particulières ; et
la fourniture des résultats de recherche pour une présentation à un utilisateur conformément au classement.

14. Système comprenant un ou plusieurs ordinateurs et un ou plusieurs dispositifs de stockage stockant des instructions qui, lorsqu'elles sont exécutées par le ou les ordinateurs, amènent le ou les ordinateurs à réaliser le procédé selon l'une quelconque des revendications précédentes.

15. Produit programme informatique codé sur un ou plusieurs supports de stockage informatiques non transitoires, le produit programme informatique comprenant des instructions qui, lorsqu'elles sont exécutées par un ou plusieurs ordinateurs, amènent le ou les ordinateurs à réaliser le procédé selon l'une quelconque des revendications 1 à 13.
